# FASCICULE DE BREVET EUROPEEN

(11) **EP 1 598 641 B1**
(45) Date de publication et mention de la délivrance du brevet: **31.01.2007**
(21) Numéro de dépôt: 05290743.3
(22) Date de dépôt: 05.04.2005
(51) Int. Cl.: G01C 23/00, G05D 1/06, G08G 5/04

(54) **Procédé et dispositif de révision d'un plan de vol d'un aéronef**
Verfahren und Vorrichtung zum Abändern eines Flugplanes eines Flugzeuges
Method and device for revising a flight plan of an aircraft

(30) Priorité: 18.05.2004 FR 0405376
(43) Date de publication de la demande: 23.11.2005
(73) Titulaire: AIRBUS France, 31060 Toulouse (FR)
(72) Inventeur: Artini, Franck, 31000 Toulouse (FR); Strongman, Edward, 31530 Bretx (FR)
(74) Mandataire: Hauer, Bernard

(56) Documents cités:
- EP-A- 0 707 194
- US-A- 5 922 031
- US-B1- 6 181 987
- US-B1- 6 643 580

## Description

La présente invention concerne un procédé et un dispositif de révision pour réaliser une révision latérale d'un plan de vol d'un aéronef, ainsi qu'un système de guidage automatique comportant un tel dispositif de révision.

On sait qu'un plan de vol comporte généralement des points de route que doit survoler l'aéronef, des informations (altitude, vitesse, ...) relatives à ces points de route, ainsi que des informations concernant des branches entre les différents points de route, cf US 6 181 987. Un tel plan de vol permet de construire une trajectoire de vol comportant lesdites branches, généralement rectilignes, qui se rejoignent latéralement auxdits points de route. Ladite trajectoire de vol comporte une trajectoire latérale définie dans le plan horizontal et une trajectoire verticale (profil de vol) définie dans le plan vertical.

On sait en outre que la révision d'un plan de vol peut consister à supprimer ou rajouter des points de route, à modifier la position de points de route ou de caractéristiques (temps, vitesse, altitude) relatives à ces points de route ou auxdites branches.

Bien que non exclusivement, la présente invention s'applique plus particulièrement à la révision d'un plan de vol courant (c'est-à-dire d'un plan de vol qui est suivi actuellement par l'aéronef), lorsque l'aéronef vole au moins sur une section de trajectoire de vol (conforme à ce plan de vol) qui est une trajectoire de vol à basse altitude. Une telle trajectoire de vol à basse altitude permet à l'aéronef de suivre au plus près le terrain survolé, notamment pour éviter de se faire repérer. La trajectoire de vol (ou section de trajectoire de vol) à basse altitude correspondante est donc située à une hauteur du terrain prédéterminée, par exemple 500 pieds (environ 150 mètres).

Si le pilote révise le plan de vol de l'aéronef, au cours d'un vol le long d'une telle section de trajectoire de vol à basse altitude, il peut arriver, après la révision dudit plan de vol, lorsque l'aéronef vole suivant le nouveau plan de vol, que ledit aéronef soit situé au-dessous de la nouvelle trajectoire de vol, en raison d'une modification induite du profil de terrain utilisé pour déterminer cette nouvelle trajectoire de vol (et parce que les pentes de montée maximales que l'aéronef peut suivre peuvent être inférieures aux pentes du terrain à survoler), et ne soit plus capable de rejoindre cette dernière ou de survoler les crêtes les plus hautes situées sous le nouveau plan de vol. Un tel risque n'est bien entendu pas admissible.

Aussi, lorsqu'au cours d'un vol le long d'une telle section de trajectoire de vol à basse altitude, le pilote veut réaliser une révision du plan de vol, il est obligé :
- de faire remonter l'aéronef à une altitude de sécurité, avant de réaliser cette révision, pour éviter tout risque de collision de l'aéronef avec le terrain environnant ;
- de réaliser ensuite la révision à cette altitude de sécurité ;
- puis, lorsque la révision est réalisée, de faire redescendre l'aéronef pour qu'il suive le nouveau plan de vol qui est alors activé (c'est-à-dire utilisé pour le guidage de l'aéronef et le calcul de prédictions notamment).

Une telle procédure est donc très complexe, et de plus nécessite de faire voler l'aéronef à une altitude de sécurité plus élevée et ainsi en particulier de se passer du masquage par le terrain pendant toute la révision dudit plan de vol.

La présente invention concerne un procédé de révision pour réaliser une révision latérale d'un plan de vol courant d'un aéronef, qui permet de remédier aux inconvénients précités.

A cet effet, selon l'invention, ledit procédé est remarquable en ce que :
a) on détermine un plan de vol auxiliaire correspondant à une révision latérale dudit plan de vol courant, au moins sur une section de vol à basse altitude ;
b) on détermine automatiquement au moins un point de décision qui indique la dernière position de l'aéronef suivant ledit plan de vol courant, où ledit plan de vol auxiliaire peut encore être activé, afin de permettre à l'aéronef de survoler en toute sécurité le terrain en suivant ledit plan de vol auxiliaire, dans les mêmes conditions de vol (et de calcul au moins de la section de vol à basse altitude) que celles prévues pour ledit plan de vol courant ;
c) on présente automatiquement au moins ledit point de décision à un pilote de l'aéronef ; et
d) le pilote peut, au moins en fonction de cette présentation, activer ledit plan de vol auxiliaire pour réaliser la révision latérale du plan de vol courant.

Ainsi, grâce à l'invention, l'aéronef peut continuer à voler à basse altitude lors de la révision du plan de vol. En effet, tant que l'aéronef n'a pas atteint ledit point de décision, le pilote sait qu'il peut activer en toute sécurité un nouveau plan de vol (à savoir ledit plan de vol auxiliaire). Ceci permet de remédier aux inconvénients précités.

En outre, la présente invention s'applique à tous types de plans de vol (et à tous types de trajectoires de vol).

De préférence, les conditions de vol prises en compte à l'étape b) comprennent au moins :
- la poussée maximale continue ;
- une consigne de vitesse ; et
- une condition relative à la panne d'un moteur de l'aéronef.

Dans un premier mode de réalisation, à l'étape a), on détermine un plan de vol auxiliaire, en réalisant au moins l'une des opérations suivantes sur ledit plan de vol courant :
- on déplace au moins un point de route ;
- on insère au moins un point de route ;
- on supprime au moins un point de route ; et
- on insère un point de route exclusif, vers lequel l'aéronef doit se diriger directement.

En outre, avantageusement :
- à l'étape b), on détermine de plus automatiquement un point de transition qui indique la position en aval la plus proche de l'aéronef sur ledit plan de vol courant, par rapport à la position actuelle de l'aéronef, à partir de laquelle une révision latérale dudit plan de vol courant peut être prise en compte ; et
- à l'étape c), on présente de plus automatiquement ledit point de transition à un pilote de l'aéronef.

De façon avantageuse, on détermine ledit point de transition, à partir :
- de la position actuelle de l'aéronef ;
- de la vitesse actuelle de l'aéronef ;
- dudit plan de vol courant ; et
- d'une durée de calcul prédéterminée.

De préférence, ladite durée de calcul prédéterminée correspond à une durée maximale pour déterminer (calculer) un plan de vol auxiliaire. Elle dépend donc des performances de calcul du calculateur de trajectoire utilisé.

Par ailleurs, dans un second mode de réalisation, ledit plan de vol auxiliaire comprend au moins une route optionnelle.

La présente invention concerne également un dispositif pour réaliser une révision latérale d'un plan de vol courant (d'un aéronef), comprenant au moins des points de route que doit survoler l'aéronef.

Selon l'invention, ledit dispositif est remarquable en ce qu'il comporte :
- des premiers moyens pour déterminer un plan de vol auxiliaire correspondant à une révision latérale dudit plan de vol courant, au moins sur une section de vol à basse altitude ;
- des deuxièmes moyens pour déterminer automatiquement au moins un point de décision qui indique la dernière position de l'aéronef suivant ledit plan de vol courant, où ledit plan de vol auxiliaire peut encore être activé, afin de permettre à l'aéronef de survoler en toute sécurité le terrain en suivant ledit plan de vol auxiliaire, dans les mêmes conditions de vol que celles prévues pour ledit plan de vol courant ;
- des troisièmes moyens pour présenter automatiquement au moins ledit point de décision à un pilote de l'aéronef ; et
- des quatrièmes moyens actionnables permettant à un pilote d'activer ledit plan de vol auxiliaire, pour réaliser la révision latérale du plan de vol courant.

De façon avantageuse, lesdits premiers moyens comportent :
- des moyens d'entrée de données et des moyens de calcul permettant à un opérateur de modifier des points de route dudit plan de vol courant ; et/ou
- des moyens pour déterminer une route optionnelle.

En outre, selon l'invention, lesdits troisièmes moyens peuvent comporter un écran de visualisation tête haute et/ou un écran de visualisation tête basse.

La présente invention concerne également un système de guidage automatique d'un aéronef, du type comportant :
- un ensemble de sources d'informations ;
- une source d'informations auxiliaire susceptible de fournir un plan de vol courant ;
- une unité centrale pour déterminer automatiquement des ordres de pilotage de l'aéronef, à l'aide d'informations reçues dudit ensemble de sources d'informations et d'un plan de vol courant fourni par ladite source d'informations auxiliaire ; et
- des moyens d'actionnement d'organes commandés de l'aéronef, auxquels sont appliqués automatiquement les ordres de pilotage déterminés par ladite unité centrale.

Selon l'invention, ledit système de guidage automatique est remarquable en ce que ladite source d'informations auxiliaire comporte un dispositif du type précité, pour réaliser une révision latérale d'un plan de vol courant de l'aéronef.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 sont deux graphiques illustrant des trajectoires de vol, respectivement dans le plan horizontal et dans le plan vertical, permettant de bien expliquer la présente invention.

La figure 4 est le schéma synoptique d'un système de guidage conforme à l'invention.

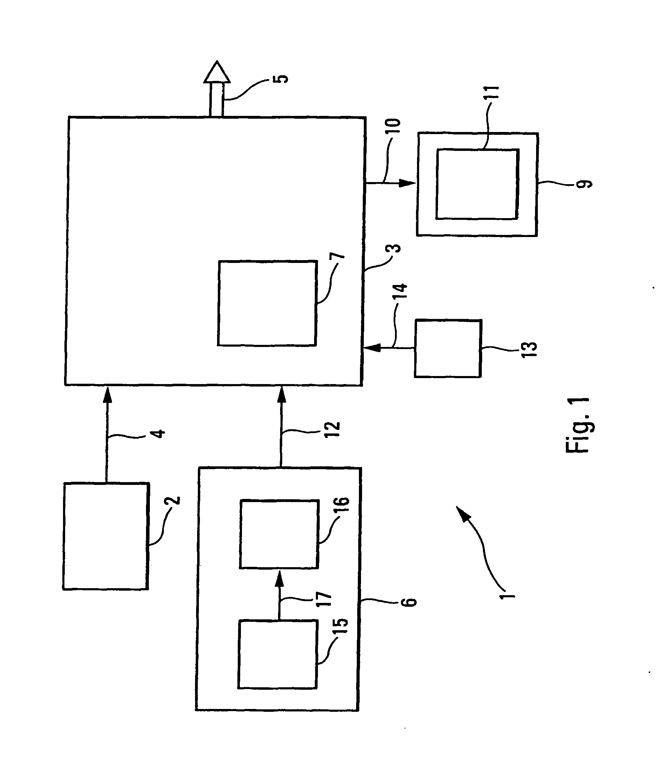

Le dispositif 1 conforme à l'invention et représenté schématiquement sur la figure 1, est destiné à réaliser une révision latérale d'un plan de vol courant PV0 d'un aéronef A.

Pour ce faire, ledit dispositif 1 qui est embarqué sur l'aéronef A, en particulier un avion de transport militaire, comporte de façon usuelle :
- un ensemble 2 de sources d'informations usuelles ; et
- une unité centrale 3 pour déterminer un plan de vol PV, notamment à l'aide d'informations reçues par l'intermédiaire d'une liaison 4 dudit ensemble 2 de sources d'informations, et pour transmettre ce plan de vol PV à des dispositifs utilisateurs précisés ci-dessous, par l'intermédiaire d'une liaison 5.

Un tel plan de vol PV comporte généralement au moins :
- des points de route P1, à savoir des points géographiques de navigation prédéfinis, que doit survoler l'aéronef A et qui sont stockés dans une base de données de navigation ou définis explicitement par un opérateur, en particulier un pilote de l'aéronef A ;
- des informations (altitude, vitesse, ...) relatives à ces points de route P1 ; et
- des informations concernant des branches S1 entre ces points de route P1.

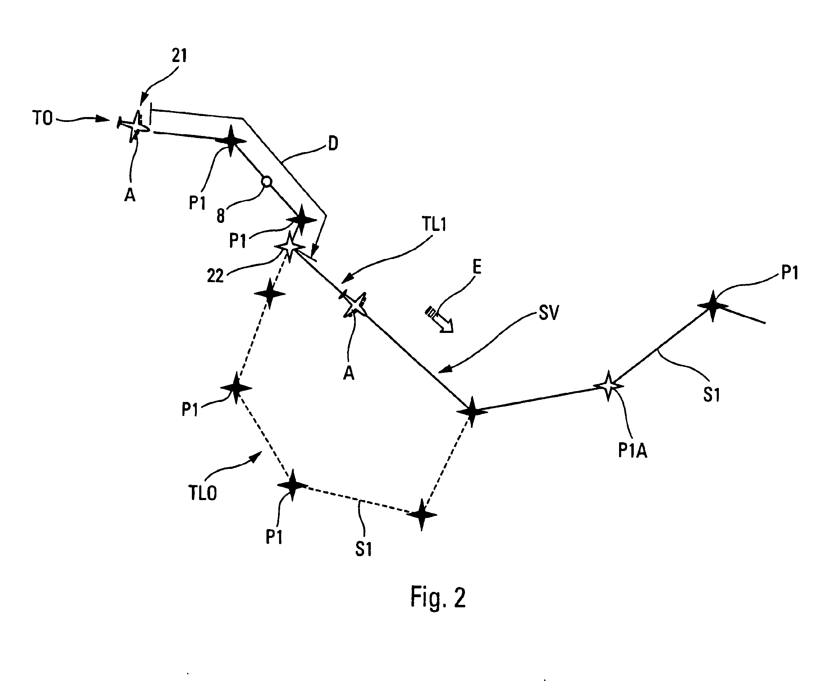

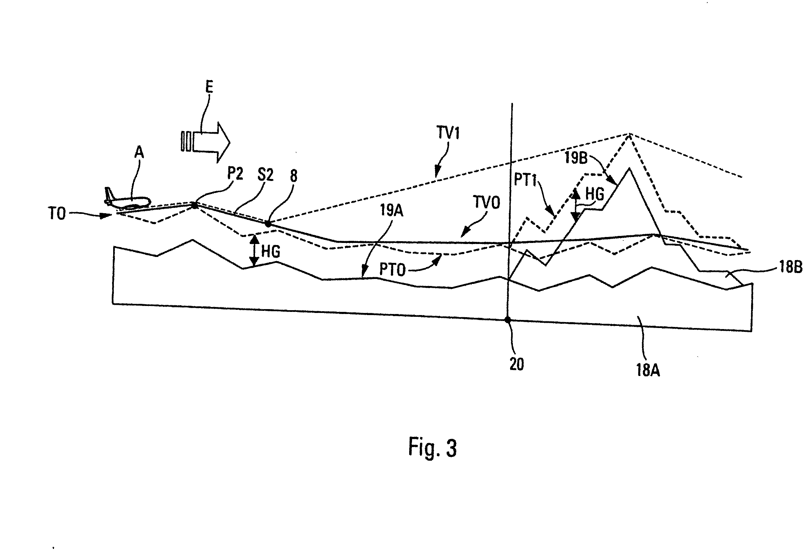

Un tel plan de vol PV permet de construire une trajectoire de vol TO comportant :
- une trajectoire latérale TL définie dans le plan horizontal et comprenant lesdites branches S1 rectilignes qui se rejoignent auxdits points de route P1, comme représenté sur la figure 2 ; et
- une trajectoire verticale TV (ou profil de vol) définie dans le plan vertical et comprenant également des segments rectilignes S2 qui se rejoignent à des points P2, comme représenté sur la figure 3.

On considère que l'aéronef A est guidé le long d'un plan de vol courant PVO avec une trajectoire latérale courante TLO et une trajectoire verticale courante TV0, par exemple en conditions IMC ("Instrument Meteorological Conditions" en anglais), c'est-à-dire en conditions météorologiques de vol aux instruments.

Selon l'invention, ledit dispositif 1 comporte de plus :
- des moyens 6 pour déterminer un plan de vol auxiliaire PV1 correspondant à une révision latérale dudit plan de vol courant PVO, au moins sur une section SV de vol à basse altitude (qui va jusqu'à un point de route P1 A représenté sur la figure 2) ;
- des moyens 7 qui sont, de préférence, intégrés dans l'unité centrale 3, pour déterminer automatiquement au moins un point de décision 8 qui indique la dernière position de l'aéronef A suivant ledit plan de vol courant PVO, où ledit plan de vol auxiliaire PV1 peut encore être activé, afin de permettre à l'aéronef A de survoler en toute sécurité le terrain en suivant ledit plan de vol auxiliaire PV1, dans les mêmes conditions de vol que celles prévues lors du calcul dudit plan de vol courant PVO.

Ces conditions de vol comprennent au moins :
■ la poussée maximale continue de l'aéronef A ;
■ une consigne de vitesse de l'aéronef A ; et
■ une condition relative à une panne d'un moteur de l'aéronef A ;

- des moyens d'affichage 9 qui sont reliés par une liaison 10 à ladite unité centrale 3, pour présenter automatiquement sur un écran de visualisation 11 au moins ledit point de décision 8 à un pilote de l'aéronef A ; et
- des moyens d'actionnement usuels 13 qui sont reliés par une liaison 14 à l'unité centrale 3 et qui permettent à un pilote d'activer ledit plan de vol auxiliaire PV1, pour réaliser la révision latérale du plan de vol courant PV0. Par une telle activation, le plan de vol est remis à jour et le plan de vol auxiliaire PV1 est celui qui devient actif et qui est donc pris en compte, notamment, pour le guidage de l'aéronef A, comme précisé ci-dessous, et/ou pour le calcul de prédictions (temps de passage, carburant disponible, vitesse, ...).

Dans le cadre de la présente invention, ledit plan de vol auxiliaire PV1 peut comporter :
- dans une première variante, une révision latérale du plan de vol courant PVO, consistant à réaliser au moins l'une des opération suivantes :
   ■ déplacer au moins un point de route P1 ;
   ■ insérer au moins un point de route P1 ;
   ■ supprimer au moins un point de route P1 ; et
   ■ insérer un point de route P1 exclusif, vers lequel l'aéronef A doit se diriger directement, selon une procédure usuelle de type "DIRECT TO".
      Pour ce faire, lesdits moyens 6 qui sont reliés par une liaison 12 à l'unité centrale 3, comportent des moyens 15 pour entrer des données et des moyens de calcul 16, qui sont reliés ensemble par une liaison 17 et qui permettent à un opérateur de modifier les points de route P1 du plan de vol courant PVO, en réalisant les opérations précédentes ; et
- dans une seconde variante, une route optionnelle qui peut être déterminée de façon usuelle par lesdits moyens 6, à l'aide de moyens usuels (par exemple lesdits moyens 15 et 16) qui sont intégrés dans lesdits moyens 6.
   En outre, selon l'invention, ledit écran de visualisation 11 est un écran tête basse, par exemple un écran de navigation usuel, ou un écran tête haute, par exemple de type HUD ("Head Up Display" en anglais). Ledit écran de visualisation 11 peut être un écran vertical ou un écran horizontal.

La présente invention s'applique plus particulièrement à un vol à basse altitude, au moins le long d'une section SV. Généralement, une trajectoire de vol à basse altitude est déterminée pour se trouver au-dessus d'un profil de terrain qui est situé (à une hauteur de garde HG prédéterminée) au-dessus du relief du terrain survolé, pour éviter toute collision avec ce terrain. Ceci est représenté sur la figure 3 pour la trajectoire verticale courante TVO correspondant au plan de vol courant PVO, qui est donc déterminée à partir d'un profil de terrain PTO qui dépend du relief 19A du terrain 1 8A au-dessous de la trajectoire latérale TLO définie par ce plan de vol courant PVO. La trajectoire verticale TVO est représentée en trait continu et le terrain 18A sous cette trajectoire verticale TVO est représenté en gris clair.

Lorsque l'on révise le plan de vol, et que l'on modifie donc le plan de vol courant PVO, en le remplaçant par exemple par ledit plan de vol auxiliaire PV1, la trajectoire latérale TL1 est modifiée et ainsi également le profil de terrain PT1 situé au-dessous du relief 19B du nouveau terrain 18B survolé (représenté en gris plus foncé sur la figure 3). Aussi, lorsque l'on réalise la révision latérale à un point 20 représenté sur la figure 3, l'aéronef A peut ne plus être en mesure de rejoindre la nouvelle trajectoire verticale TV1 (représentée en traits interrompus sur la figure 3) ou de survoler les crêtes les plus hautes (profil 19B) situées sous la nouvelle trajectoire latérale TL1, dans une situation usuelle.

Le dispositif 1 conforme à l'invention permet de remédier à cet inconvénient, en présentant au pilote le point de décision 8 qui indique la dernière position de l'aéronef A suivant le plan de vol courant PV0 (trajectoire verticale TV0), où le plan de vol auxiliaire PV1 peut encore être activé, afin de permettre à l'aéronef A de survoler en toute sécurité le terrain 18B en suivant ledit plan de vol auxiliaire PV1 (trajectoire verticale TV1), et ceci dans les mêmes conditions de vol (par exemple des consignes de poussée et de vitesse, et une condition relative à une panne d'un moteur de l'aéronef A) que celles prévues initialement pour ledit plan de vol PV0.

On notera que si le plan de vol auxiliaire PV1 est activé, l'aéronef A suit la trajectoire verticale TV1 à partir du point de décision 8 (où il quitte donc la trajectoire verticale TV0). Toutefois, jusqu'au point 20, la trajectoire latérale est inchangée. L'aéronef A ne bifurque latéralement sur la nouvelle trajectoire latérale TL1 qu'à partir dudit point 20 (figure 3).

En outre, sur la figure 2, on a représenté :
- en trait continu, la trajectoire latérale effectivement suivie par l'aéronef A, prenant en compte (après un point 22 précisé ci-dessous) la nouvelle trajectoire latérale TL1 relative au plan de vol auxiliaire PV1 activé ; et
- en traits interrompus, la partie de trajectoire latérale faisant initialement partie de la trajectoire latérale TL0 relative au plan de vol PVO, mais non prise en compte dans ledit plan de vol auxiliaire PV1 activé.
   Bien entendu, dans le cadre de la présente invention, lorsque la révision du plan de vol concerne la prise en compte d'une route optionnelle (qui est activable par un pilote de l'aéronef A à l'aide des moyens 13), ledit point de décision 8 est également présenté au pilote, et représente donc le dernier point sur le plan de vol courant PVO, où l'activation de cette route optionnelle peut être réalisée en toute sécurité.

Par ailleurs, l'unité centrale 3 détermine, de plus, automatiquement un point de transition 22 qui indique la position en aval (dans le sens de vol E) la plus proche de l'aéronef A sur ledit plan de vol courant PVO, par rapport à la position actuelle 21 de l'aéronef A, à partir de laquelle une révision latérale dudit plan de vol courant PVO peut être prise en compte, si cette révision latérale est faite à ladite position actuelle 21. Lesdits moyens 9 présentent automatiquement ledit point de transition 22 à un pilote de l'aéronef A. Ledit point de transition 22 se trouve (horizontalement) à une distance D (dépendant du temps de recalcul) de la position actuelle 21 de l'aéronef A, comme représenté sur la figure 2.

L'unité centrale 3 détermine ledit point de transition 22, à partir d'informations reçues notamment dudit ensemble 2 de sources d'informations, et en particulier à partir de :
- la position actuelle 21 de l'aéronef A ;
- la vitesse actuelle de l'aéronef A ;
- le plan de vol courant PV0 ; et
- une durée de calcul prédéterminée.

Cette durée de calcul prédéterminée correspond à la durée maximale pour permettre aux moyens 16 de déterminer le plan de vol auxiliaire PV1, c'est-à-dire de calculer la trajectoire de vol (TV1 et TL1) correspondante, pour des conditions de calcul les plus difficiles possibles (avec notamment un profil de terrain PT1 rude). Ceci permet de remédier au fait qu'un plan de vol auxiliaire PV1 n'est pas directement disponible et ne peut donc pas être directement suivi par l'aéronef A, lorsqu'un pilote réalise une révision latérale.

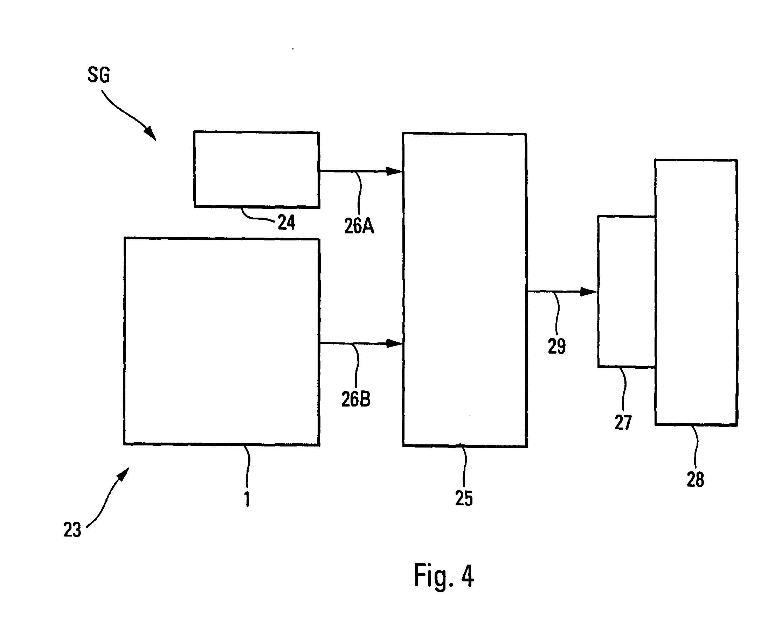

Dans un mode de réalisation préféré, ledit dispositif 1 conforme à l'invention fait partie d'un système de guidage automatique SG représenté schématiquement sur la figure 4.

Ledit système de guidage automatique SG comporte de façon usuelle :
- un ensemble 24 de sources d'informations ;
- une source d'informations auxiliaire 23 susceptible de fournir un plan de vol courant PVO ;
- une unité centrale 25 qui est reliée par une liaison 26A audit ensemble 24 et par une liaison 26B à ladite source d'informations auxiliaire 23, pour déterminer automatiquement des ordres de pilotage de l'aéronef A, à l'aide d'informations reçues dudit ensemble 2 de sources d'informations et d'un plan de vol courant PV0 fourni par ladite source d'informations auxiliaire 23 ; et
- des moyens d'actionnement 27 d'organes commandés 28 (gouvernes, ...) de l'aéronef A, auxquels sont appliqués automatiquement par une liaison 29 les ordres de pilotage déterminés par ladite unité centrale 25.
   Selon l'invention, ladite source d'informations auxiliaire 23 comporte le dispositif 1 précité et conforme à l'invention, pour réaliser une révision latérale d'un plan de vol courant PVO de l'aéronef A, ladite liaison 26B pouvant comporter (ou correspondre à) la liaison 5 de la figure 1.

On notera que ladite source d'informations auxiliaire 23 (plus précisément par exemple l'unité centrale 3 de cette source 23) détermine la trajectoire de vol correspondant à un plan de vol courant (révisé ou non) à l'aide de performances de montée et de descente prédites. De plus, elle détermine cette trajectoire de vol TO de manière à ce qu'elle épouse, au mieux et au plus près, la configuration du relief 19A, 19B du terrain 18A, 18B survolé, sur la section SV de vol à basse altitude. De plus, généralement, ladite trajectoire de vol TO est déterminée en prenant en compte le fait qu'un moteur est en panne (de manière à permettre à l'aéronef A de continuer à voler le long de ladite trajectoire de vol TO après une panne d'un moteur), la poussée maximale continue et la consigne de vitesse.

## Revendications

1. Procédé de révision pour réaliser une révision latérale d'un plan de vol courant d'un aéronef (A), comportant au moins des points de route (P1) que doit survoler l'aéronef (A), ledit aéronef (A) volant suivant une trajectoire de vol à basse altitude permettant audit aéronef (A) de suivre au plus près le terrain (18A) survolé, procédé selon lequel :
a) on détermine un plan de vol auxiliaire correspondant à une révision latérale dudit plan de vol courant sur une section de vol (SV) à basse altitude, ladite révision latérale entraînant la prise en compte d'un nouveau terrain (18B) à survoler ;
b) on détermine automatiquement au moins un point de décision (8) qui indique la dernière position de l'aéronef (A) suivant ledit plan de vol courant, où ledit plan de vol auxiliaire peut encore être activé, afin de permettre à l'aéronef (A) de survoler en toute sécurité ledit nouveau terrain (18B) en suivant ledit plan de vol auxiliaire, et ceci dans les mêmes conditions de vol que celles prévues pour ledit plan de vol courant ;
c) on présente automatiquement au moins ledit point de décision (8) à un pilote de l'aéronef (A) ; et
d) le pilote peut, au moins en fonction de cette présentation, activer ledit plan de vol auxiliaire pour réaliser la révision latérale du plan de vol courant.

2. Procédé selon la revendication 1,
**caractérisé en ce que** les conditions de vol prises en compte à l'étape b) comprennent au moins :
- la poussée maximale continue ;
- une consigne de vitesse ; et
- une condition relative à la panne d'un moteur de l'aéronef (A).

3. Procédé selon l'une des revendications 1 et 2,
**caractérisé en ce qu**'à l'étape a), on détermine un plan de vol auxiliaire, en réalisant au moins l'une des opérations suivantes sur ledit plan de vol courant :
- on déplace au moins un point de route (P1) ;
- on insère au moins un point de route (P1) ;
- on supprime au moins un point de route (P1) ; et
- on insère un point de route (P1) exclusif, vers lequel l'aéronef doit se diriger directement.

4. Procédé selon l'une des revendications 1 à 3,
**caractérisé en ce que** :
- à l'étape b), on détermine de plus automatiquement un point de transition (22) qui indique la position en aval la plus proche de l'aéronef (A) sur ledit plan de vol courant, par rapport à la position actuelle (21) de l'aéronef (A), à partir de laquelle une révision latérale dudit plan de vol courant peut être prise en compte ; et
- à l'étape c), on présente de plus automatiquement ledit point de transition (22) à un pilote de l'aéronef.

5. Procédé selon la revendication 4,
**caractérisé en ce que** l'on détermine ledit point de transition (22), à partir :
- de la position actuelle (21) de l'aéronef (A) ;
- de la vitesse actuelle de l'aéronef (A) ;
- dudit plan de vol courant ; et
- d'une durée de calcul prédéterminée.

6. Procédé selon la revendication 5,
**caractérisé en ce que** ladite durée de calcul prédéterminée correspond à une durée maximale pour déterminer un plan de vol auxiliaire.

7. Procédé selon l'une des revendications 1 et 2,
**caractérisé en ce que** ledit plan de vol auxiliaire comprend au moins une route optionnelle.

8. Dispositif pour réaliser une révision latérale d'un plan de vol courant d'un aéronef (A), comprenant au moins des points de route (P1) que doit survoler l'aéronef (A), ledit aéronef (A) volant suivant une trajectoire de vol à basse altitude permettant audit aéronef (A) de suivre au plus près le terrain (18A) survolé, ledit dispositif comportant :
- des premiers moyens (6) pour déterminer un plan de vol auxiliaire correspondant à une révision latérale dudit plan de vol courant sur une section de vol (SV) à basse altitude, ladite révision latérale entraînant la prise en compte d'un nouveau terrain (18B) à survoler ;
- des deuxièmes moyens (3) pour déterminer automatiquement au moins un point de décision (8) qui indique la dernière position de l'aéronef (A) suivant ledit plan de vol courant, où ledit plan de vol auxiliaire peut encore être activé, afin de permettre à l'aéronef (A) de survoler en toute sécurité ledit nouveau terrain (18B) en suivant ledit plan de vol auxiliaire, et ceci dans les mêmes conditions de vol que celles prévues pour ledit plan de vol courant ;
- des troisièmes moyens (9) pour présenter automatiquement au moins ledit point de décision (8) à un pilote de l'aéronef (A) ; et
- des quatrièmes moyens (13) actionnables, permettant à un pilote d'activer ledit plan de vol auxiliaire, pour réaliser la révision latérale du plan de vol courant.

9. Dispositif selon la revendication 8,
**caractérisé en ce que** lesdits premiers moyens (6) comportent des moyens (15) d'entrée de données et des moyens de calcul (16) permettant à un opérateur de modifier des points de route (P1) dudit plan de vol courant.

10. Dispositif selon l'une des revendications 8 et 9,
**caractérisé en ce que** lesdits premiers moyens (6) comportent des moyens pour déterminer une route optionnelle.

11. Dispositif selon l'une quelconque des revendications 8 à 10,
**caractérisé en ce que** lesdits troisièmes moyens (9) comportent un écran de visualisation (11) tête haute.

12. Dispositif selon l'une quelconque des revendications 8 à 11,
**caractérisé en ce que** lesdits troisièmes moyens (9) comportent un écran de visualisation (11) tête basse.

13. Système de guidage automatique d'un aéronef, ledit système de guidage (SG) comportant :
- un ensemble (24) de sources d'informations ;
- une source d'informations auxiliaire (23) susceptible de fournir un plan de vol courant ;
- une unité centrale (25) pour déterminer automatiquement des ordres de pilotage de l'aéronef (A), à l'aide d'informations reçues dudit ensemble (2) de sources d'informations et d'un plan de vol courant fourni par ladite source d'informations auxiliaire (23) ; et
- des moyens d'actionnement (27) d'organes commandés (28) de l'aéronef (A), auxquels sont appliqués automatiquement les ordres de pilotage déterminés par ladite unité centrale (25),
**caractérisé en ce que** ladite source d'informations auxiliaire (23) comporte un dispositif (1) tel que celui spécifié sous l'une quelconque des revendications 8 à 12, pour réaliser une révision latérale d'un plan de vol courant de l'aéronef (A).

14. Aéronef,
**caractérisé en ce qu**'il comporte un système de guidage (SG) tel que celui spécifié sous la revendication 13.

15. Aéronef,
**caractérisé en ce qu**'il comporte un dispositif (1) tel que celui spécifié sous l'une quelconque des revendications 8 à 12.

## Claims

1. A method of revision for carrying out a lateral revision of a current flight plan of an aircraft (A), comprising at least waypoints (P1) that the aircraft (A) must overfly, said aircraft (A) flying along a low altitude flight trajectory allowing said aircraft (A) to follow as closely as possible the terrain (18A) overflown, in which method:
a) an auxiliary flight plan corresponding to a lateral revision of said current flight plan over a low altitude flight section (SV) is determined, said lateral revision entailing the taking into account of a new terrain (18B) to be overflown;
b) at least one decision point (8) which indicates the last position of the aircraft (A) along said current flight plan, where said auxiliary flight plan can still be activated, so as to allow the aircraft (A) to overfly said new terrain (18B) in complete safety by following said auxiliary flight plan, and to do so under the same flight conditions as those envisaged for said current flight plan is determined automatically;
c) at least said decision point (8) is presented automatically to a pilot of the aircraft (A); and
d) the pilot can, at least as a function of this presentation, activate said auxiliary flight plan so as to carry out the lateral revision of the current flight plan.

2. The method as claimed in claim 1,
**characterized in that** the flight conditions taken into account in step b) comprise at least:
- the maximum continuous thrust;
- a speed preset; and
- a condition relating to the fault of an engine of the aircraft (A).

3. The method as claimed in any one of claims 1 and 2,
**characterized in that** in step a), an auxiliary flight plan is determined by carrying out at least one of the following operations on said current flight plan:
- at least one waypoint (P1) is shifted;
- at least one waypoint (P1) is inserted;
- at least one waypoint (P1) is deleted; and
- an exclusive waypoint (P1) toward which the aircraft must direct itself directly is inserted.

4. The method as claimed in any one of claims 1 to 3,
**characterized in that** :
- in step b), a transition point (22) which indicates the downstream position closest to the aircraft (A) on said current flight plan, with respect to the actual position (21) of the aircraft (A), on the basis of which a lateral revision of said current flight plan may be taken into account, is moreover automatically determined; and
- in step c), said transition point (22) is moreover presented automatically to a pilot of the aircraft.

5. The method as claimed in claim 4,
**characterized in that** said transition point (22) is determined on the basis:
- of the actual position (21) of the aircraft (A);
- of the actual speed of the aircraft (A);
- of said current flight plan; and
- of a predetermined duration of computation.

6. The method as claimed in claim 5,
**characterized in that** said predetermined duration of computation corresponds to a maximum duration for determining an auxiliary flight plan.

7. The method as claimed in any one of claims 1 and 2,
**characterized in that** said auxiliary flight plan comprises at least one optional route.

8. A device for carrying out a lateral revision of a current flight plan of an aircraft (A), comprising at least waypoints (P1) that the aircraft (A) must overfly, said aircraft (A) flying along a low altitude flight trajectory allowing said aircraft (A) to follow as closely as possible the terrain (18A) overflown, said device comprising:
- first means (6) for determining an auxiliary flight plan corresponding to a lateral revision of said current flight plan over a low altitude flight section (SV), said lateral revision entailing the taking into account of a new terrain (18B) to be overflown;
- second means (3) for automatically determining at least one decision point (8) which indicates the last position of the aircraft (A) along said current flight plan, where said auxiliary flight plan can still be activated, so as to allow the aircraft (A) to overfly said new terrain (18B) in complete safety by following said auxiliary flight plan, and to do so under the same flight conditions as those envisaged for said current flight plan;
- third means (9) for automatically presenting at least said decision point (8) to a pilot of the aircraft (A); and
- fourth actuatable means (13), allowing a pilot to activate said auxiliary flight plan, so as to carry out the lateral revision of the current flight plan.

9. The device as claimed in claim 8,
**characterized in that** said first means (6) comprise data input means (15) and computation means (16) allowing an operator to modify waypoints (P1) of said current flight plan.

10. The device as claimed in any one of claims 8 and 9,
**characterized in that** said first means (6) comprise means for determining an optional route.

11. The device as claimed in any one of claims 8 to 10,
**characterized in that** said third means (9) comprise a head-up display screen (11).

12. The device as claimed in any one of claims 8 to 11,
**characterized in that** said third means (9) comprise a head-down display screen (11).

13. An automatic guidance system for an aircraft, said guidance system (SG) comprising:
- a set (24) of information sources;
- an auxiliary source of information (23) able to provide a current flight plan;
- a central unit (25) for automatically determining orders for steering the aircraft (A), with the aid of information received from said set (2) of information sources and a current flight plan provided by said auxiliary source of information (23); and
- means of actuation (27) of controlled members (28) of the aircraft (A), to which the steering orders determined by said central unit (25) are applied automatically,
**characterized in that** said auxiliary source of information (23) comprises a device (1) such as that specified under any one of claims 8 to 12, for carrying out a lateral revision of a current flight plan of the aircraft (A).

14. An aircraft,
**characterized in that** it comprises a guidance system (SG) such as that specified under claim 13.

15. An aircraft,
**characterized in that** it comprises a device (1) such as that specified under any one of claims 8 to 12.

## Patentansprüche

1. Überarbeitungsverfahren, um eine Seitenkorrektur eines laufenden Flugplans eines Flugzeugs (A) durchzuführen, mit wenigstens Streckenpunkten (P1), die vom Flugzeug (A) überflogen werden müssen, wobei das Flugzeug (A) entlang einer Flugbahn mit geringer Höhe fliegt, die dem Flugzeug (A) ermöglicht, dem überflogenen Boden (18A) sehr nahe zu folgen, wobei in dem Verfahren:
a) ein Hilfs-Flugplan bestimmt wird, der einer Seitenkorrektur des laufenden Flugplans über einen Flugabschnitt (SV) mit geringer Höhe entspricht, wobei die Seitenkorrektur ein zu überfliegendes neues Gebiet (18B) mit berücksichtigt;
b) automatisch wenigstens ein Entscheidungspunkt (8) bestimmt wird, der die letzte Position des Flugzeugs (A) nach dem laufenden Flugplan anzeigt, an welchem der Hilfs-Flugplan noch aktiviert werden kann, um so dem Flugzeug (A) zu ermöglichen, unter jeglicher Sicherheit das neue Gelände (18B) nach dem Hilfs-Flugplan zu überfliegen, und dies unter den gleichen Flugbedingungen, wie denjenigen, die für den laufenden Flugplan vorgesehen sind;
c) automatisch wenigstens der Entscheidungspunkt (8) einem Piloten des Flugzeugs (A) präsentiert wird; und
d) der Pilot wenigstens in Abhängigkeit von dieser Präsentation den Hilfs-Flugplan aktivieren kann, um die Seitenkorrektur des laufenden Flugplans durchzuführen.

2. Verfahren nach Anspruch 1,
**dadurch gekennzeichnet, dass** die am Schritt b) berücksichtigten Flugbedingungen wenigstens umfassen:
- kontinuierlicher Maximalschub;
- einen Geschwindigkeitswert; und
- einen Zustand im Bezug auf die Panne eines Triebwerks des Flugzeugs (A).

3. Verfahren nach einem der Ansprüche 1 und 2,
**dadurch gekennzeichnet, dass** am Schritt a) ein Hilfs-Flugplan bestimmt wird, indem wenigstens einer der folgenden Vorgänge an dem laufenden Flugplan durchgeführt werden:
- es wird wenigstens ein Streckenpunkt (P1) verschoben;
- es wird wenigstens ein Streckenpunkt (P1) eingefügt;
- es wird wenigstens ein Streckenpunkt (P1) weggelassen; und
- es wird ein exklusiver Streckenpunkt (P1) eingefügt, nach welchem sich das Flugzeug direkt richten muss.

4. Verfahren nach einem der Ansprüche 1 bis 3,
**dadurch gekennzeichnet, dass**:
- am Schritt b) ferner automatisch ein Übergangspunkt (22) bestimmt wird, welcher die flugabwärts nächste Position des Flugzeugs (A) auf dem laufenden Flugplan in Bezug zu der aktuellen Position (21) des Flugzeugs (A) anzeigt, von der aus eine Seitenkorrektur des laufenden Flugplans berücksichtigt werden kann; und
- am Schritt c) ferner automatisch der Übergangspunkt (22) einem Piloten des Flugzeugs präsentiert wird.

5. Verfahren nach Anspruch 4,
**dadurch gekennzeichnet, dass** der Übergangspunkt (22) bestimmt wird aus:
- der aktuellen Position (21) des Flugzeugs (A);
- der aktuellen Geschwindigkeit des Flugzeugs (A);
- des laufenden Flugplans; und
- einer vorbestimmten Berechnungsdauer.

6. Verfahren nach Anspruch 5,
**dadurch gekennzeichnet, dass** die vorbestimmte Berechnungsdauer einer maximalen Zeitdauer entspricht, um einen Hilfs-Flugplan zu bestimmen.

7. Verfahren nach einem der Ansprüche 1 und 2,
**dadurch gekennzeichnet, dass** der Hilfs-Flugplan wenigstens eine optionale Strecke umfasst.

8. Vorrichtung zum Durchführen einer Seitenkorrektur eines laufenden Flugplans eines Flugzeugs (A), mit wenigstens Streckenpunkten (P1), die vom Flugzeug (A) überflogen werden müssen, wobei das Flugzeug (A) entlang einer Flugbahn auf geringer Höhe fliegt, die dem Flugzeug (A) ermöglicht, dem überflogenen Gelände (18A) sehr nah zu folgen, wobei die Vorrichtung umfasst:
- erste Mittel (6), um einen Hilfs-Flugplan entsprechend einer Seitenkorrektur des laufenden Flugplans über einem Flugabschnitt (SV) mit geringer Höhe zu bestimmen, wobei die Seitenkorrektur ein zu überfliegendes neues Gelände (18B) mit berücksichtigt;
- zweite Mittel (3), um automatisch wenigstens einen Entscheidungspunkt (8) zu bestimmen, der die letzte Position des Flugzeugs (A) nach dem laufenden Flugplan anzeigt, an welchem der Hilfs-Flugplan noch aktiviert werden kann, um so einem Flugzeug (A) zu ermöglichen, unter jeglicher Sicherheit das neue Gelände (18B) nach dem Hilfs-Flugplan zu überfliegen, und dies unter den gleichen Flugbedingungen, wie denjenigen, die für den laufenden Flugplan vorgesehen sind;
- dritte Mittel (9), um automatisch wenigstens den Entscheidungspunkt (8) einem Piloten des Flugzeugs (A) zu präsentieren; und
- betätigbare vierte Mittel (13), die einem Piloten ermöglichen, den Hilfs-Flugplan zu aktivieren, um die Seitenkorrektur des laufenden Flugplans durchzuführen.

9. Vorrichtung nach Anspruch 8,
**dadurch gekennzeichnet, dass** die ersten Mittel (6) Dateneingabemittel (15) und Rechnermittel (16) umfassen, die einem Bediener ermöglichen, die Streckenpunkte (P1) des laufenden Flugplans zu modifizieren.

10. Vorrichtung nach einem der Ansprüche 8 und 9,
**dadurch gekennzeichnet, dass** die ersten Mittel (6) Mittel umfassen, um eine optionale Strecke zu bestimmen.

11. Vorrichtung nach einem der Ansprüche 8 bis 10,
**dadurch gekennzeichnet, dass** die dritten Mittel (9) einen Bildschirm (11) in Kopfhöhe umfassen.

12. Vorrichtung nach einem der Ansprüche 8 bis 11,
**dadurch gekennzeichnet, dass** die dritten Mittel (9) einen Bildschirm (11) unterhalb der Kopfhöhe umfassen.

13. System zur automatischen Führung eines Flugzeugs, wobei das Führungssystem (SG) umfasst:
- eine Gruppe (24) von Informationsquellen;
- eine Hilfs-Informationsquelle (23), die einen laufenden Flugplan liefern kann;
- eine Zentraleinheit (25), um automatisch Steuerbefehle für das Flugzeug (A) mit Hilfe von Informationen zu bestimmen, die sie von der Gruppe (2) von Informationsquellen und dem durch die Hilfs-Informationsquelle (23) gelieferten laufenden Flugplan erhält; und
- Betätigungsmittel (27) für Steuerelemente (28) des Flugzeugs (A), an welchen die durch die Zentraleinheit (25) bestimmten Steuerbefehle angewendet werden,
**dadurch gekennzeichnet, dass** die Hilfs-Informationsquelle (23) eine Vorrichtung (1) umfasst, wie sie in einem der Ansprüche 8 bis 12 angegeben ist, um eine Seitenkorrektur eines laufenden Flugplans des Flugzeugs (A) durchzuführen.

14. Flugzeug,
**dadurch gekennzeichnet, dass** dieses ein Führungssystem (SG) umfasst, wie es im Anspruch 13 angegeben ist.

15. Flugzeug,
**dadurch gekennzeichnet, dass** dieses eine Vorrichtung (1) umfasst, wie es in einem der Ansprüche 8 bis 12 angegeben ist.
